## Europäisches Patentamt

## European Patent Office

## Office européen des brevets

(19)

(11) Veröffentlichungsnummer: **0 086 874**
**A2**

(12) ## EUROPÄISCHE PATENTANMELDUNG

(21) Anmeldenummer: 82109862.1

(22) Anmeldetag: 26.10.82

(51) Int. Cl.³: **G 01 L 1/22**
**G 01 G 3/14**

(30) Priorität: 13.02.82 DE 3205137

(43) Veröffentlichungstag der Anmeldung:
31.08.83 Patentblatt 83/35

(84) Benannte Vertragsstaaten:
AT BE CH DE FR GB IT LI LU NL SE

(71) Anmelder: HOTTINGER BALDWIN MESSTECHNIK
GMBH
Im Tiefen See 45 Postfach 42 35
D-6100 Darmstadt(DE)

(72) Erfinder: Fickelscher, Kurt
Herderstrasse 19
D-6710 Frankenthal(DE)

(72) Erfinder: Ort, Werner, Dipl.-Phys. Dr.
Mozartweg 42
D-6100 Darmstadt(DE)

(74) Vertreter: Brand, Fritz, Dipl.-Ing.
Hottinger Baldwin Messtechnik GmbH Patentabteilung
Im Tiefen See 45 Postfach 42 35
D-6100 Darmstadt(DE)

(54) **Kraftaufnehmer mit Dehnungsmessstreifen.**

(57) Die Anmeldung bezieht sich auf einen Kraftaufnehmer mit einem Lenkersystem in zwei Ebenen. Eine Ebene des Lenkersystems wird von zwei V-förmig angeordneten Lenkerfedern gebildet, die andere Ebene von der Meßfeder. Dieser Kraftaufnehmer mit integrierter Führungsfunktion ist bei guter Genauigkeit außerordentlich billig in der Herstellung.

Fig 1

EP 0 086 874 A2

Kraftaufnehmer

Die Erfindung betrifft einen Kraftaufnehmer nach dem Oberbegriff des Anspruchs 1.

Ein derartiger Kraftaufnehmer ist aus der DE-OS 3o 11 245
bekannt. Er ist dort als oberschalige Waage ausgeführt. Das
Lenkersystem besteht aus zwei übereinander angeordneten,
V-förmigen Lenkern, die jeweils aus zwei Lenkerfedern bestehen. Die zu messende Kraft wird über einen losen Schubstab vom Lenkersystem in die Mitte der Meßfeder eingeleitet.
Durch diesen Schubstab, der keine Momente übertragen kann,
wird die ursprüngliche Krafteinleitung und die Meßfeder entkoppelt, lediglich die vertikal wirkende Gewichtskraft
wirkt auf die separate Meßfeder ein. Auf diese Weise wird
erreicht, daß das Meßergebnis nicht von der Lage des Schwerpunktes des Wiegegutes auf der Waagschale abhängt wenn das
Lenkersystem entsprechend justiert wurde. Die enge Toleranz
dieses sogenannten "Eckenlastfehlers" wird von den nationalen Zulassungsbehörden vorgeschrieben. Dieses System arbeitet zwar sehr genau, ist aber relativ aufwendig in der
Herstellung.

Weiterhin ist es beispielsweise aus der US-PS 4 o65 926 bekannt, Kraftaufnehmer als Dreifach-Biegebalken auszugestalten. Derartige Dreifachbiegebalken werden im allgemeinen
aus einem Stück Federmaterial gearbeitet, sie sind daher
schon vom Material her und darüberhinaus auch in der Fertigung sehr kostenintensiv. Weitere Nachteile dieser Lösung
sind darin zu sehen, daß die durch dezentrale Belastung
verursachten Momente in unterschiedlicher Weise auf die
Dehnungsmeßstreifen wirken und damit einen erheblichen Ekkenlastfehler verursachen. Dieser muß an jedem Kraftaufnehmer individuell durch empirisch-iterative mechanische Nacharbeit durch Abfeilen der Stege mühsam behoben werden.
Außerdem ist die Applikation der Dehnungsmeßstreifen aufwendig, die einzeln und teilweise sogar auf gekrümmten

- 2 -

Flächen erfolgt.

Aus der US-PS 3 3o4 773 schließlich ist ein Kraftaufnehmer bekannt, bei welchem ein Krafteinleitungsglied in einer starren, V-förmigen Traverse gleitet. Die Kräfte werden durch Meßfedern aufgenommen, die mit Dehnungsmeßstreifen appliziert sind und oberhalb und unterhalb der Traverse angeordnet sind. Die Wirkungsweise dieser Anordnung ist mit einem aus Lenkerfedern bestehenden Lenkersystem oder einem Dreifach-Biegebalken nicht zu vergleichen.

Diesem Stand der Technik gegenüber liegt der Erfindung die Aufgabe zugrunde, einen Kraftaufnehmer zu erstellen, der bei guter Genauigkeit außerordentlich einfach und wirtschaftlich herzustellen ist. Erfindungsgemäß wird diese Aufgabe durch das Kennzeichen des Anspruchs 1 gelöst. Die Führungsfunktion durch die bei oberschaligen Waagen Momente durch dezentral einwirkende Kräfte abgefangen werden, damit sie das Wiegeergebnis nicht verfälschen ist in den Kraftaufnehmer integriert durch ein Lenkersystem, dessen eine Ebene durch zwei V-förmig angeordnete, weiche Lenkerfedern gebildet wird und dessen zweite Ebene aus einer mit Dehnungsmeßstreifen applizierten Meßfeder besteht. Die Meßfeder ist also gleichzeitig Lenkerfeder. Wesentlicher Vorteil ist es dabei, daß das Gesamtsystem aus ganz wenigen, einfachst herzustellenden und zu montierenden Teilen besteht, daß der Eckenlastfehlerausgleich schnell und genau vorgenommen werden kann und daß die Meß- und Lenkerfedern aus hochwertigem Federwerkstoff bestehen können, weil der Materialaufwand gering ist.

Eine besonders kompakte Ausführungsform ist dadurch gekennzeichnet, daß Meßfeder und Lenkerfedern in Kraftrichtung gesehen übereinander angeordnet sind, wobei die Lenkerfedern je zwei Schwächungsstellen aufweisen und eine Symmetrie zu der Winkelhalbierenden des "V" besteht und daß die Dehnugsmeßstreifen der Meßfeder jeweils in einer der beiden Ebenen liegen, die durch zwei Schwächungsstellen verlaufen und senkrecht zur Winkelhalbierenden stehen. Bei einer anderen Ausführungsform befindet sich die Meßfeder in Kraftrichtung gesehen außerhalb des Bereichs der Lenkerfedern.

Die Höhenjustierung der Lenkerfedern, die für eine Korrektur des Eckenlastfehlers des Kraftaufnehmers sorgt, kann besonders einfach dadurch vorgenommen werden, daß eine Höhenjustierung der Befestigungspunkte der Lenkerfedern durch Schrauben vorgesehen ist.

Die Figuren zeigen schematisch Ausführungsbeispiele der Erfindung. Es zeigen

Fig. 1     einen Kraftaufnehmer, bei welchem die Meßfeder unterhalb des V-förmigen Lenkers angebracht ist.

Fig. 2     Einen Kraftaufnehmer, bei welchem die Meßfeder in Kraftrichtung gesehen außerhalb des Bereichs der Lenkerfedern angeordnet ist.

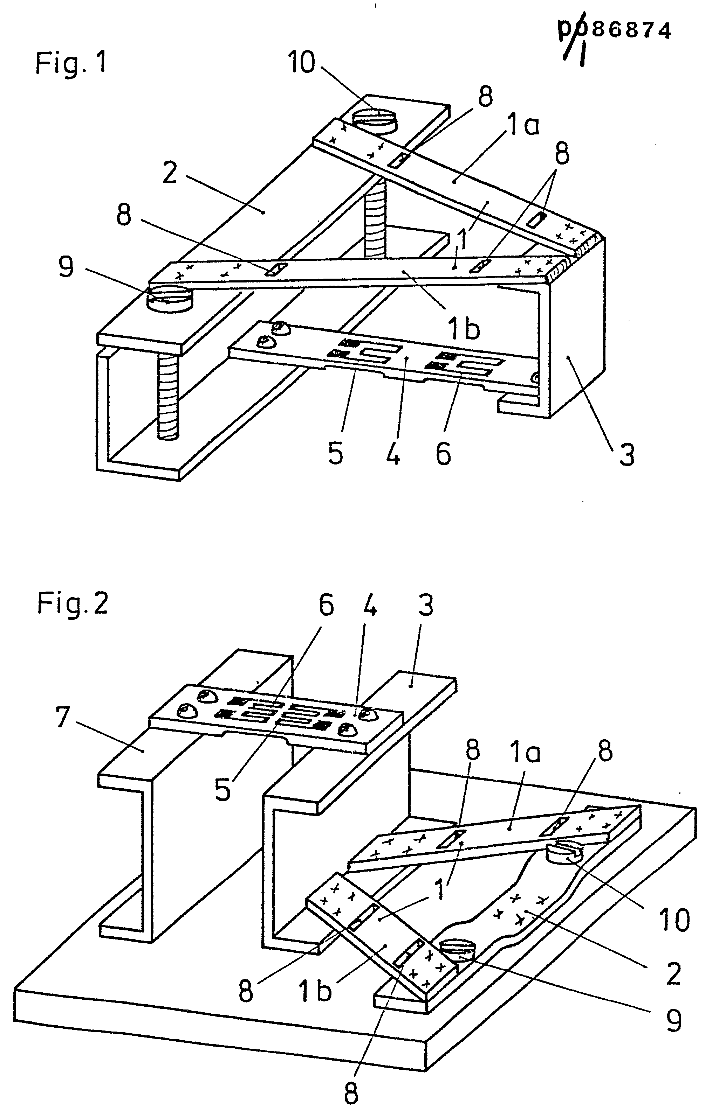

Gleiche Bauteile sind in den Figuren mit gleichen Bezugsziffern versehen. Ein Lenker 1 besteht aus zwei V-förmig angeordneten Lenkerfedern 1a und 1b, die Lenkerfedern sind einerseits über ein Zwischenteil 2, an welchem sie beispielsweise angepunktet sind, mit dem Gehäuse des Kraftaufnehmers verbunden. Die andere Seite der Lenkerfedern 1a, b ist, beispielsweise ebenfalls wieder durch Punkten, mit einem Krafteinleitungsglied 3 verbunden. Die zu messende Kraft wird in das Krafteinleitungsglied 3 in in der Figur nicht dargestellter, an sich bekannter Weise eingeleitet. Die Meßfeder 4, auf der Dehnungsmeßstreifen 5, 6 appliziert sind, ist mit dem Krafteinleitungsglied 3 beispielsweise durch Schrauben verbunden. Die Dehnungsmeßstreifen 5, 6 sind in bekannter Weise elektrisch zu einer Halbbrücke bzw. Vollbrücke verschaltet. Die andere Seite der Meßfeder 4 ist entweder mit dem Zwischenteil 2 verbunden (Fig. 1) oder über ein weiteres Formstück 7 mit dem Gehäuse (Fig. 2). Die

- 4 -

Lenkerfedern 1a, b weisen Schwächungsstellen auf in Gestalt von Rillen und/oder Schlitzen 8. Das Formstück 2 ist an der Stelle, wo die Lenkerfedern 1a, b angepunktet sind, in Richtung der Krafteinleitung elastisch verformbar. Schrauben 9, 1o dienen der genauen Justierung der Höhe der Befestigungspunkte der Lenkerfedern, mit welcher der Eckenlastfehler korrigiert werden kann. Statt der Schrauben ist es auch möglich, die Justierung in einem in den Figuren nicht dargestellten Justagegestell vorzunehmen, nach erfolgter Justierung die einmal gefundene Höhenlage beispielsweise mit Unterlegblättchen zu justieren und das Ganze dann wiederum festzupunkten.

Obwohl die eigentliche Meßfeder als Einfach-Biegebalken ausgeführt ist, wodurch - wie bereits ausgeführt - erhebliche wirtschaftliche Vorteile in der Herstellung gegeben sind, weist die Biegefeder nicht die Verformung des Einfach-Biegebalkens unter Belastung auf. Vielmehr erfolgt eine S-förmige Verformung wie beim Mehrfach-Biegebalken, da das Krafteinleitungsglied 3 und damit die eine Seite der Meßfeder 4 bei Belastung parallel geführt werden. Die in Fig. 1 gezeigte Ausführungsform der Meßfeder, bei welcher die Meßfedern Schwächungsstellen aufweisen, über denen die Schwächungsstellen des Lenkers 1 liegen, ist dabei besonders vorteilhaft, da die Lenkerfedern definierte Dehnungsstellen aufweisen, die oberhalb der Dehnungsmeßstreifen 5, 6 liegen. Infolgedessen werden die an dem Zwischenteil 2 bzw. dem Krafteinleitungsglied 3 angepunkteten Teile der Lenkerfedern 1a, 1b nicht mitgedehnt, sondern bleiben starr. Dadurch wird die Hysterese des Kraftaufnehmers erheblich vermindert.

Kraftaufnehmer

Patentansprüche:

1. Kraftaufnehmer mit einem Lenkersystem, das aus zwei Lenkern besteht, die in zwei zueinander parallelen Ebenen angeordnet sind, wobei der erste Lenker von zwei V-förmig angeordneten Lenkerfedern gebildet wird und mit einer mit Dehnungsmeßstreifen applizierten flachen Meßfeder, dadurch gekennzeichnet, daß der zweite Lenker durch die Meßfeder (4) gebildet wird.

2. Kraftaufnehmer nach Anspruch 1, dadurch gekennzeichnet, daß Meßfeder (4) und Lenkerfedern (1a, 1b) in Kraftrichtung gesehen übereinander angeordnet sind.

3. Kraftaufnehmer nach Anspruch 2, dadurch gekennzeichnet, daß die Lenkerfedern (1a, 1b) je zwei Schwächungsstellen aufweisen und daß eine Symmetrie dieser Anordnung zu der Winkelhalbierenden des "V" besteht und daß die Dehnungsmeßstreifen (5, 6) der Meßfeder (4) jeweils in einer der beiden Ebenen liegen, die durch zwei Schwächungsstellen (6) verlaufen und senkrecht zur Winkelhalbierenden stehen.

4. Kraftaufnehmer nach Anspruch 1, dadurch gekennzeichnet, daß die Meßfeder (4) in Kraftrichtung gesehen außerhalb des Bereichs der Lenkerfedern (1a, 1b) angeordnet ist.

5. Kraftaufnehmer nach mindestens einem der vorhergehenden Ansprüche, dadurch gekennzeichnet, daß eine Höhenjustierung der Befestigungspunkte der Lenkerfedern 1a, 1b) durch Schrauben (9, 1o) vorgesehen ist.

Fig. 1

Fig. 2